(19) Europäisches Patentamt
European Patent Office
Office européen des brevets

(11) Veröffentlichungsnummer: **0 248 261**
**A2**

(12) # EUROPÄISCHE PATENTANMELDUNG

(21) Anmeldenummer: **87107222.9**

(22) Anmeldetag: **19.05.87**

(51) Int. Cl.[3]: **C 08 F 8/06**
C 08 F 8/50, C 08 G 81/02

(30) Priorität: **31.05.86 DE 3618378**

(43) Veröffentlichungstag der Anmeldung:
**09.12.87 Patentblatt 87/50**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Meurer, Kurt Peter, Dr.**
**Am Krahfeld 1**
**D-5330 Königswinter 21(DE)**

(72) Erfinder: **Waniczek, Helmut, Dr.**
**Wolfskaul 2**
**D-5000 Köln 80(DE)**

(72) Erfinder: **Sylvester, Gerd, Dr.**
**An der Steinruetsch 5a**
**D-5090 Leverkusen(DE)**

(72) Erfinder: **Witte, Josef, Dr.**
**Haferkamp 10**
**D-5000 Köln 80(DE)**

(54) **Polyolefincarbonsäuren, ihre Herstellung und ihre Verwendung zur Herstellung von Polyolefin-Polycarbonat-Blockcopolymeren.**

(57) Gegenstand der vorliegenden Erfindung sind Poly-($C_2$-$C_{10}$-α-olefin)-carbonsäuren mit $\overline{M}w$ (Gewichtsmittel) 2000 bis 350 000, ihre Herstellung durch oxidativen Abbau von Polyolefinen oder durch Reaktion von "lebenden" Polyolefinen mit $CO_2$, ihre Überführung in Poly-($C_2$-$C_{10}$-α-olefin)-carbonsäurehalogenide und deren Verwendung zur Herstellung von Polyolefin-Polycarbonat-Blockcopolymeren sowie die nach dem erfindungsgemäßen Verfahren erhältlichen Blockcopolymeren.

EP 0 248 261 A2

BAYER AKTIENGESELLSCHAFT 5090 Leverkusen, Bayerwerk
Konzernverwaltung RP
Patentabteilung PS/Kü-c

# Polyolefincarbonsäuren, ihre Herstellung und ihre Verwendung zur Herstellung von Polyolefin-Polycarbonat-Blockcopolymeren

Gegenstand der vorliegenden Erfindung sind Poly-($C_2$-$C_{10}$-α-olefin)-carbonsäuren mit Molekulargewichten $\bar{M}w$ ($\bar{M}w$, Gewichtsmittel ermittelt über Kopplung Gelpermeationschromatographie, Viskosimetrie) von 2000 bis 350 000, vorzugsweise von 70000 bis 200000 und insbesondere von 70000 bis 100000.

Unter Poly-($C_2$-$C_{10}$-α-olefin)-carbonsäuren versteht man gesättigte Carbonsäuren von Polyolefinen, wie beispielsweise Polyethylen, Polypropylen, Polybutylen, oder von Copolymeren aus Ethylen, Propylen, Hexen, Buten und/oder Isobutylen, deren Carbonsäuregruppen vorzugsweise endständig sind und die vorzugsweise maximal 2 COOH-Gruppen pro Molekül haben. Polystyrolcarbonsäuren sind nicht darunter zu subsummieren.

Gegenstand der vorliegenden Erfindung ist außerdem ein Verfahren zur Herstellung von Poly-($C_2$-$C_{10}$-α-olefin)-carbonsäuren mit Molekulargewichten $\bar{M}w$ ($\bar{M}w$ ermittelt wie vorstehend beschrieben) von 2000 bis 350 000, vorzugsweise von 70000 bis 200000 und insbesondere von 70000 bis

100000, das dadurch gekennzeichnet ist, daß man Poly-($C_2$-$C_{10}$)-α- olefine mit $\bar{M}w$ (ermittelt wie vorstehend beschrieben) von 50000 bis 355000 und einer Uneinheitlichkeit von maximal etwa 10 (Uneinheitlichkeit U = Mw/Mn -1) oxidativ bei Temperaturen von 150°C bis 300°C behandelt und gegebenenfalls abbaut.

Beispielsweise kann in einem Extruder (ZSK 32) mit einem Länge-Durchmesserverhältnis von 40 pro Stunde 6000 g isotaktisches Polypropylen mit einem $\bar{M}w$ von 355000, einer Unheitlichkeit U = (Mw/Mn -1) von 9,4 eindosiert, auf 250°C bis 260°C erhitzt und mit 1500 Nl/Stunde Luft unter Druck vermischt werden, wobei nach der Zone der Luftdosierung die Zylindertemperatur des Extruders auf 210°C gehalten wird.

In der Entgasungszone tritt die überschüssige Luft aus, und die erhaltene Polypropylencarbonsäure wird an der Düse abgesponnen. Nach dieser ersten Oxidation besitzt die resultierende Polypropylencarbonsäure ein $\bar{M}w$ von etwa 113000, eine Uneinheitlichkeit von 4.17 und einen Carboxylgruppengehalt von 0,7 Carboxylgruppen pro Molekül.

Dieses Produkt kann nochmals in derselben Weise oxidativ extrudiert werden, wobei die resultierende Polypropylencarbonsäure ein $\bar{M}w$ von 94000, eine Uneinheitlichkeit von 3.1 und einen Carboxylgruppengehalt von 1.3 Carboxylgruppen pro Molekül hat.

Dieses Produkt kann ein drittes Mal oxidativ extrudiert werden, wobei die resultierende Polypropylencarbonsäure ein $\bar{M}w$ von 70000 eine Uneinheitlichkeit von 4.3 und einen

Carboxygruppengehalt von 1.5 bis 2 Carboxylgruppen pro Molekül hat.

Die Bestimmung der Carboxylgruppen erfolgt jeweils durch acidimetrische Titration mit einer methanolischen Kaliumhydroxidlösung.

Der Ausdruck Nl/Stunde Luft bedeutet Normliter/Stunde.

Als Drücke sind bei der oxidativen Extrusion solche von 1 bar bis 100 bar anzuwenden.

Die erfindungsgemäße Oxidation zu Polyolefincarbonsäuren kann auch in einem Kneter bei Temperaturen von 150° C bis 300° C und Reaktionszeiten von 1 bis 1000 Minuten, vorzugsweise von 10 - 1000 Minuten und Luftdurchsätzen von 10 - 1000 Nl/Stunde und Drücken von 1 bis 100 bar durchgeführt werden.

Gegenstand der vorliegenden Erfindung ist ein weiteres Verfahren zur Herstellung von Poly-($C_2$-$C_{10}$-α-olefin)-carbonsäuren, das dadurch gekennzeichnet ist, daß man $C_2$-$C_{10}$-Olefine mit bekannten metallorganischen Mischkatalysatoren, beispielsweise mit V(acetylacetonat)$_3$/Al(Cl)-($C_2H_5$)$_2$ in bekannter Weise zu Molekulargewichten $\bar{M}w$ (Gewichtsmittel, wie eingangs erläutert gemessen) von etwa 50000 bis etwa 350000 polymerisiert und anschließend mit $CO_2$ bei Temperaturen von -10° C bis -70° C und einer Reaktionszeit von 6 bis 20 Stunden bei einem $CO_2$-Druck bis zu 5 bar behandelt, das Reaktionsgemisch danach mit wäßriger Säure ansäuert und die erhaltene Polyolefincarbonsäure abtrennt.

Die neuen Poly-($C_2$-$C_{10}$-α-olefin)-carbonsäuren mit Molekulargewichten von 2000 bis 350 000 können nach Überführung in die entsprechenden Poly-($C_2$-$C_{10}$-α-olefin)-carbonsäurehalogenide, vorzugsweise Poly-($C_2$-$C_{10}$- α-olefin)-carbonsäurechloride, zur Herstellung von Polyolefin-Polycarbonat-Blockcopolymeren verwendet werden.

Gegenstand der vorliegenden Erfindung sind somit außerdem Poly-($C_2$-$C_{10}$-α-olefin)-carbonsäure-halogenide, vorzugsweise Poly-($C_2$-$C_{10}$-α-olefin)-carbonsäurechloride mit Molekulargewichten $\bar{M}w$ (Gewichtsmittel gemessen durch Gelpermeationschromatographie/Viskosimetrie) von 2000 bis 350 000, vorzugsweise von 70000 bis 200000 und insbesondere von 70000 bis 100000.

Gegenstand der vorliegenden Erfindung ist außerdem ein Verfahren zur Herstellung der Poly-($C_2$-$C_{10}$-α-olefin)-carbonsäure-halogenide, vorzugsweise -chloride, mit $\bar{M}w$ (Gewichtsmittel gemessen wie vorstehend) von 2000 bis 350 000, das dadurch gekennzeichnet ist, daß man die erfindungsgemäßen Poly-($C_2$-$C_{10}$-α-olefin)-carbonsäuren mit Halogenierungsmitteln, vorzugsweise mit Chlorierungsmitteln, beispielsweise mit Thionylchlorid, gegebenenfalls in einem organischen Lösungsmittel, beispielsweise in aliphatischen, cycloaliphatischen oder aromatischen Kohlenwasserstoffen, umsetzt.

Organische Lösungsmittel sind bevorzugt halogenierte oder alkylierte aromatische Kohlenwasserstoffe wie Toluol oder Chlorbenzol.

Bei Abwesenheit der Lösungsmittel erfolgt die Halogenierung in Substanz, wobei eine Suspension der Carbonsäure im Halogenierungsmittel vorliegt.

Aus der US-Patentschrift 3.135.716 sind Polymere mit reaktiven Endgruppen bekannt. Diese Polymeren unterscheiden sich von den erfindungsgemäßen dadurch, daß sie Doppelbindungen innerhalb der Polymerkette enthalten (Spalte, 2, Zeilen 4/5 der US-3 135 716). Ihre Herstellung erfolgte unter Zuhilfenahme der anionischen Polymerisation und anschließender Funktionalisierung. Es ist allgemein bekannt, daß die Funktionalisierung von konjugierten Dienen, vinylsubstituierten Aromaten oder Acrylaten durch anionische Polymerisation gelingt.

Da es mit Hilfe der anionischen Polymerisation nicht möglich ist, Poly($C_2$-$C_{10}$-olefine) zu funktionalisieren, war es somit nicht naheliegend, Poly($C_2$-$C_{10}$-α-olefin)carbonsäuren herzustellen. Die Synthese von Poly($C_2$-$C_{10}$-α-Olefin)carbonsäuren durch oxidativen Abbau oder durch Ziegler-Natta-Katalyse ist somit aus der US-PS 3.135.716 nicht naheliegend.

Aus der DE-AS 1.150.205 ist ein Verfahren zur Herstellung von endgruppenmodifizierten Butadienpolymerisaten bekannt, es unterscheidet sich von dem erfindungsgemäßen Verfahren dadurch, daß die Herstellung von endgruppenmodifizierten Butadienpolymerisaten durch Polymerisation von als Endgruppen eintretenden Startern und Modifikatoren mit Bis-Typ-Struktur erfolgt. Das Verfahren ist dadurch gekennzeichnet, daß man zur Herstellung flüssiger Butadienpolymerisate eines Molekulargewichtes von 500 bis 15000

sowohl als freie Radikale bildenden Starter als auch als Modifikator solche Verbindungen mit Bis-Typ-Struktur verwendet, die endständig Carboxylgruppen aufweisen. Endgruppenmodifizierte Poly($C_2$-$C_{10}$-α-Olefine) (Gruppentransferpolymerisation) sind nach diesem Verfahren nicht herstellbar.

Aus dem US-Patent 3 285 949 sind Carboxylgruppen-haltige Butadienpolymere bekannt. Ihre Herstellung erfolgt durch Lösungspolymerisation von Butadienmonomer mit einem aliphatischen Azodicarboxylatinitiator. Diese Herstellung unterscheidet sich von der Herstellung gemäß vorliegender Erfindung dadurch, daß hier die Carboxylierung des Polybutadiens durch einen Carboxylgruppen einführenden Initiator erfolgt. Diese Carboxylierungsmethode ist auf Poly($C_2$-$C_{10}$-α-Olefine) nicht übertragbar.

Aus der DE-OS 2 702 626 sind Carboxylgruppen-haltige Polymerisate beschrieben, die ein $\bar{M}n$ (Zahlenmittel) größer 600 haben, Polyolefincarbonsäuren, die keine Doppelbindungen enthalten, sind jedoch in der DE-OS nicht aufgeführt.

Gegenstand der vorliegenden Erfindung ist außerdem die Verwendung der erfindungsgemäßen Poly-($C_2$-$C_{10}$-α-olefin)-carbonsäurehalogenide, vorzugsweise -chloride zur Herstellung von aromatischen Polyolefin-Polycarbonat-Blockpolymeren.

Gegenstand der vorliegenden Erfindung ist somit außerdem ein Verfahren zur Herstellung von aromatischen Polyolefin-Polycarbonat-Blockcopolymeren, das dadurch gekennzeichnet ist, daß man aromatische Polycarbonate mit $\bar{M}w$ von

2000 bis 60000 ($\bar{M}w$ ermittelt durch Gelpermeationschromatographie/Viskosimetrie) mit endständigen phenolischen OH-Gruppen mit den erfindungsgemäßen Poly-$C_2$-$C_{10}$-α-olefin)-carbonsäurehalogeniden in Mengenverhältnissen von 1 bis 99 Gew.-% Polycarbonat zu 99 Gew.-% bis 1 Gew.-% Carbonsäurehalogenid, vorzugsweise von 10 bis 90 Gew.-% Polycarbonat zu 90 bis 10 Gew.-% Carbonsäurehalogenid und insbesondere von 90 bis 35 Gew.-% Polycarbonat zu 10 bis 65 Gew.-% Carbonsäurehalogenid, bei Temperaturen von 30° C bis 120° C in inerten organischen Lösungsmitteln, vorzugsweise in chlorierten aliphatischen Kohlenwasserstoffen und insbesondere in $CH_2Cl_2$ oder $CHCl_3$, gegebenenfalls unter Mitverwendung von Katalysatoren umsetzt und nach einer Reaktionszeit von etwa 2 Stunden bis etwa 10 Stunden das Lösungsmittel entfernt und das erhaltene Blockcopolymer reinigt und isoliert.

Gegenstand der vorliegenden Erfindung sind außerdem die nach dem erfindungsgemäßen Verfahren erhältlichen aromatischen Polyolefin-Polycarbonat-Blockcopolymeren.

Diese Blockcopolymeren besitzen eine Reihe wertvoller Eigenschaften wie beispielsweise gute Verträglichkeit in Polycarbonat oder Polyolefinabmischungen (Haftvermittlung), sie können also als Dispergatoren in unverträglichen Polymerabmischungen dienen.

Bezüglich der erfindungsgemäßen Polypropylen-Polycarbonat-Blockcopolymeren ergeben sich die folgenden Blockstrukturen:

it-PP-PC:

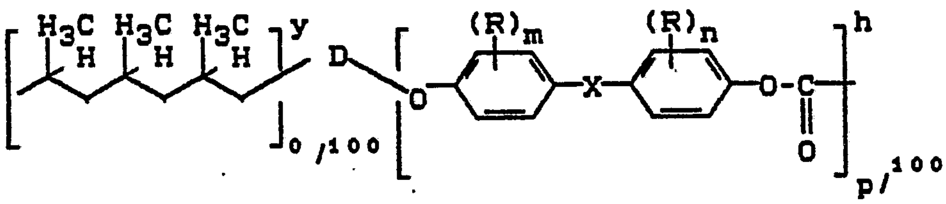

syn-PP-b-PC:

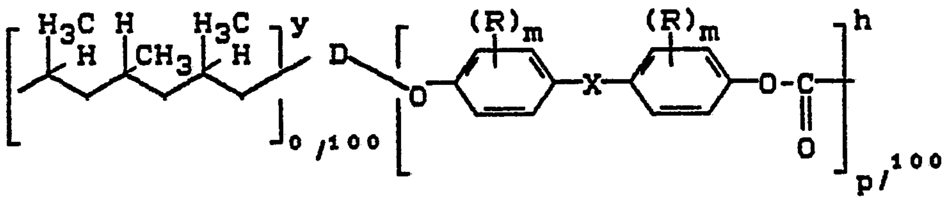

at-PP-b-PC:

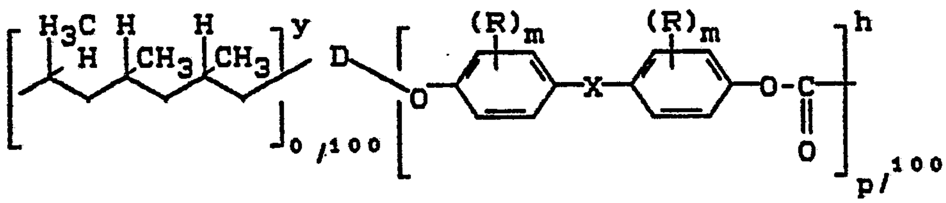

A) m = 0, 1, 2

B) R = H, Cl, Br, gesättigte Alkylsubstituenten mit 1-3 C-Atomen

C) X = eine Bindung, $C_2$-$C_8$-Alkylen, $C_2$-$C_8$-Alkyliden, $C_5$-$C_{15}$-Cycloalkylen, $C_5$-$C_{15}$-Cycloalkyliden, $SO_2$, SO, O, CO oder

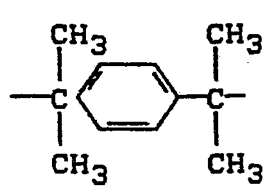

D) : C= O-Verknüpfung, mittelständig oder endständig, vorzugsweise endständig

E) O : 1-100

F) P : 100-1

G) O+P: 100

H) Y : 20 - 400

I) h : 20 - 400

Aus der DE-AS 1 162 559 sind Blockmischpolykondensate bekannt, die 5 bis 95 Gew.-% an Polycarbonatblöcken und 95 bis 5 Gew.-% an Polyolefinblöcken einkondensiert enthalten, wobei die Polyolefinblöcke über enständige OH-Gruppen eingebaut sind.

Aus der DE-OS 2 702 626 (Le A 17 356) ist außerdem bekannt, carboxylgruppenhaltige Polymerisate mit mittleren Molekulargewichten $\bar{M}w$ (Zahlenmittel des Molekulargewichtes, ermittelt beispielsweise über die Säurezahl) nach dem Phasengrenzflächenverfahren mit Diphenolen und Phosgen zu Polymerisat-Segmente eingebaut enthaltenden Polycarbonat-Elastomeren umzusetzen. Derartige Polycarbonat-Elastomere haben im Vergleich zu den erfindungsgemäßen Blockcopolymeren jedoch den Nachteil, daß sie, vorzugsweise Doppelbindungen enthalten und somit Nachteile im Alterungsverhalten aufweisen. Derartige Polycarbonatelastomere zeigen eine niedrige Erweichungstemperatur und setzen sich im

Gegensatz zu den erfindungsgemäß hergestellten Polyolefin-Polycarbonat-Blockcopolymeren aus Hart-Weich-Segmenten zusammen.

Poly-($C_2$-$C_{10}$)-α-olefine sind bekannt. (Siehe beispielsweise den Übersichtsartikel von P. Pino und R. Mulhaupt, in Angew. Chem. 11, 869, (1980)).

Im Falle der Polypropylene unterscheidet man isotaktisches Polypropylen (siehe beispielsweise DE-OS 2043508) syndiotaktisches Polypropylen (siehe beispielsweise E. A. Youngmann, J. Boor, Jr. Macromol. Rev. 2,33 (1967) und ataktisches Polypropylen (siehe beispielsweise W. Dörrscheidt et al., Kunststoffe 66, 572, (1976).

Weitere geeignete Ausgangspoly-α-olefine sind beispielsweise Polyethylene, Polyisobutylene sowie Copolymere aus Ethylen, Propylen, Hexen, Buten und/oder Isobutylen.

Sie sind beispielsweise beschrieben im oben genannten Übersichtsartikel von P. Pino und R. Mulhaupt, loc.cit., und in "Polyisobutylen", H. Güterbock, Springer Verlag, Heidelberg, 1959.

Erfindungsgemäß erhältliche Poly-($C_2$-$C_{10}$-α-olefin)-carbonsäuren sind beispielsweise somit Polyethylendicarbonsäuren, Polypropylendicarbonsäuren, Polyisobutylencarbonsäuren, Carbonsäuren von Copolymeren aus Ethylen und Propylen, Carbonsäuren von Copolymeren aus Ethylen und Buten und Carbonsäuren aus Terpolymeren aus Ethylen, Propylen und Hexen.

Sie sind charakterisiert durch ihr Molgewicht (Gelpermationschromatographie/Viskosimetrie) $\bar{M}w$ vorzugsweise von 2000 bis 350000, es sind farblose bis gelbliche Produkte mit einer durch methanolische Kaliumhydroxid-Titration ermittelten COOH-Funktionalität zwischen 0,5 und 2,0 pro Molekül. Sie haben [η]-Viskositäten von 10 bis 70 $cm^3$/g. Die Uneinheitlichkeiten

$U = \frac{\bar{M}w}{\bar{M}n} -1$ liegen zwischen 2.0 und 4,5. Ihre Erweichungspunkte liegen im allgemeinen zwischen 100° C und 200° C.

Erfindungsgemäß erhältliche Poly-($C_2$-$C_{10}$-α-olefin)-carbonsäuredihalogenide sind beispielsweise demzufolge Polyethylen-dicarbonsäuredichloride, Polyethylendicarbonsäuredibromide, Polypropylendicarbonsäuredichloride, Polyisobutylencarbonsäurechloride und Carbonsäurechloride von Copolymeren aus Ethylen und Propylen und Carbonsäurebromide von Copolymeren aus Ethylen und Buten, und ähnliche.

Die erfindungsgemäß erhältlichen Poly-($C_2$-$C_{10}$-α-olefin)-carbonsäurehologenide sind schwach gelblich gefärbte Produkte mit einem Chlorgehalt zwischen 0,3 und 2,0 Gew.-%. Sie besitzen [η]-Viskositäten von 10 bis 70 $cm^3/g$. Die Uneinheitlichkeiten

$U = \frac{\bar{M}w}{\bar{M}n} -1$ liegen zwischen 2,0 und 4.5. Die Erweichungspunkte liegen im allgemeinen zwischen 100°C und 200°C.

Aromatische Polycarbonate mit Gewichtsmittelmolekulargewichten $\bar{M}w$ (ermittelt wie oben beschrieben) von 2000 bis 60000 und endständigen phenolischen OH-Gruppen sind ebenfalls bekannt. (Siehe beispielsweise H. Schnell, Angew. Chem., 68, Seiten 633-640 (1956), H. Schnell, "Chemistry and Physics of Polycarbonates" , Interscience Publishers 1964, Volume 9 of Polymer Reviews und H. Krimm in Houben Weyl, Methoden der organischen Chemie, Band XIV/2, Makromolekulare Stoffe, Teil 2, 1963, Seiten 48-56).

Sie werden beispielsweise hergestellt durch Phasengrenzflächenkondensation von Bis-phenol-A und Phosgen in bekannter Weise ohne Kettenabbrecher.

0248261

Die erfindungsgemäß erhältlichen aromatischen Polyolefin-Polycarbonat-Blockcopolymeren lassen sich nach Reinigung und Isolierung zu Formkörpern in den üblichen Mischaggregaten wie Walzen, Knetern, Ein- und Mehrwellenextrudern verarbeiten.

Die Verarbeitungstemperaturen sollten 250°C vorzugsweise nicht überschreiten.

Man kann ihnen noch Additive wie beispielsweise Gleit- und Entformungsmitel, Nukleiermittel, Stabilisatoren, Füll- und Verstärkungsstoffe, Flammschutzmittel oder Farbstoffe in bekannter Weise zusetzen.

Bevorzugte Füllstoffe, die auch verstärkend wirken können, sind Glaskugeln, Glimmer, Silikate, Quarz, Talkum, Titandioxid, Wollastonit.

Als Flammschutzmittel kommen in Frage z.B. Polyhalogendiphenyl, Polyhalogendiphenylether, Polyhalogenphthalsäure, Polyhalogenoligo- und -polycarbonate.

Die erfindungsgemäß erhältlichen aromatischen Polyolefin-Polycarbonat-Blockcopolymeren finden technische Verwendung beispielsweise als Haftvermittler, Kompatibilitätsverbesserer oder Dispergatoren in unverträglichen, thermoplastischen Polymermischungen wie z.B. Polycarbonat/Polypropylen-Blends (s. hierzu: J. Henschen, R. Jerome, Ph. Tessie, Macromolecules 14, 242 (1981) und darin zitierte Literatur).

Allgemeine Beschreibung der Herstellung von Carboxylgruppen enthaltenden, isotaktischem Polypropylen:

A) Oxidation im Extruder

1) In einen Extruder (ZSK 32) mit einem Längs-Durchmesser-Verhältnis LD = 40 werden 6000 g/h isotaktisches Polypropylen mit einem mittleren Molekulargewicht von 340000 eindosiert, auf 250-260° C erhitzt und mit 1500 NL/Stunde Luft unter Druck vermischt. Nach der Zone zur Luftdosierung wird die Zylindertemperatur des Extruders auf 210° C gehalten. In der Entgasungszone tritt die überschüssige Luft aus, und das abgebaute Polypropylen wird an der Düse abgesponnen.

Die beiliegende Abbildung zeigt die sechs Zonen des Extruders und seine Funktionen sowie die drei Öffnungen wie folgt:

| | | | | | |
|---|---|---|---|---|---|
| 1. Einzugszone | Länge | 150 | mm | Temperatur | 60° C |
| 2. Aufheizzone | " | " | " | " | 180° C |
| 3. Dosierzone | " | 100 | " | " | 250° C |
| 4. Oxidationszone | " | 550 | " | " | 210° C |
| 5. Entgasungszone | " | 300 | " | " | 200° C |
| 6. Extrusionszone | " | 80 | " | " | 190° C |

7. ist die Einfüllöffnung
8. ist die Luftzufuhr
9. ist die Entgasungsöffnung.

Nach der ersten Extrusion unter oxidativem Abbau besitzt das Produkt folgende molekulare Daten:

| [η]visk. /cm³/g/ | [η]GPC /cm³/g/ | $M_n$ /kg/mol/ | $M_w$ /kg/mol/ | U | $f_{COOH}$ /n/mol/ |
|---|---|---|---|---|---|
| 68 | 57 | 22 | 113 | 4.17 | 0.7 |

Dieses bereits abgebaute Polypropylen wird nochmals in der gleichen Art extrudiert und besitzt dann die folgenden molekularen Daten:

| [η]visk. /cm³/g/ | [η]GPC /cm³/g/ | $M_n$ /kg/mol/ | $M_w$ /kg/mol/ | U | $f_{COOH}$ /n/mol/ |
|---|---|---|---|---|---|
| 50 | 42 | 23 | 94 | 3.1 | 1.2 |

Nach einer weiteren oxidativen Behandlung im Extruder wird ein Produkt mit den folgenden Daten erhalten:

| [η]visk. /cm³/g/ | [η]GPC /cm³/g/ | $M_n$ /kg/mol/ | $M_w$ /kg/mol/ | U | $f_{COOH}$ /n/mol/ |
|---|---|---|---|---|---|
| 45 | 40 | 13 | 70 | 4.3 | 1.5 |

Das als Ausgangsprodukt verwendete Polypropylen hatte eine Uneinheitlichkeit von 9,4 und war das Handelsprodukt Vestolen P 4200®.

B) Oxidation im Kneter

Ein Kneter mit einem Volumen von 5 ltr. wird mit 3 kg isotaktischem Polypropylen mit einem Molekulargewicht von 340000 beschickt. Es wird bei 210°C geknetet und 400 Nl/h Druckluft eingepreßt. Mit einem Druckhalteventil wird der Druck im Kneter bei 5 bar gehalten.

Nach 1 Stunde Kneten wird der Kneter entspannt und entleert. Das Produkt besitzt die folgenden molekularen Daten:

| [η]visk. cm³/g/ | [η]GPC cm³/g/ | $M_n$ kg/mol/ | $M_w$ kg/mol/ | U | fCOOH |
|---|---|---|---|---|---|
| 28 | 30 | 3 | 70 | 3,4 | 1,8 |

Das als Ausgangsprodukt verwendete Polypropylen war wiederum Vestolen P 4200®.

1 Beispiel

Polypropylencarbonsäure (syndiotakt. bzw. ataktisch)

In einem 350 ml Autoklaven (Gaseinlaß, Einspritzvorrichtung, Rührung, Druck bis 5 bar) werden 140 ml trockenes Toluol sowie 330 mg (0.34 mmol) Anisol unter Stickstoff (2 bar) bei einer Temperatur von -40°C gerührt. Man fügt 50 g (1.2 mol) Propylen hinzu und kühlt auf -60°C unter ständigem Rühren ab. Anschließend gibt man 94 mg (0.78 mmol Diethylaluminiumchlorid in 10 ml Toluol und 234 mg (0.678 mmol) Vanadiumtriacetylacetonat in 10 ml Toluol in obiger Reihenfolge zu. Die Laufzeit der Polymerisation beträgt bei -65°C 48 h. Nach 33 h wurde 5 Minuten lang bei -65°C Kohlendioxid eingedrückt (3 bar) und weiter rühren gelassen. Nach Ausfällen mit Ethanol erhält man ein farbloses Produkt. Die Ausbeute beträgt 21 g (42 % der Theorie). Die Funktionalität der Polypropylencarbonsäure betrug 0.5.

2. Beispiel

Polyolefincarbonsäurechlorid

10 g Polypropylencarbonsäure ($m_n$ = 23.000, Mw/Mn - 1 = 4.3, f = 1.6) werden in einem 250 ml Dreihalskolben (Thermometer, Stickstoffeinlaß, KPG-Rührer, Rückflußkühler) bei 100°C in 80 ml destilliertem Toluol unter Stickstoff erhitzt. Nach 30 Minuten hat sich eine klare Lösung gebildet, es werden innerhalb von 30 min 20 ml über Leinöl destilliertes, farbloses Thionylchlorid zugetropft. 2 h läßt man bei 80°C rühren, bis die Chlorwasserstoff und Schwefeldioxid-Entwicklung beendet ist. Thionylchlorid wird schließlich abdestilliert. Man wäscht solange den Rückstand mit kaltem Toluol, bis kein Geruch an Thionylchlorid mehr wahrnehmbar ist. Die Ausbeute beträgt 9,5 g (95 % der Theorie).

3. Beispiel

Polypropylen-Polycarbonat-Blockpolymer

10 g Polypropylencarbonsäure ($M_n$= 23000, Mw/Mn - 1= 4.3, f = 0,3 - 2,0) werden in einem 250 ml Dreihalskolben (Thermometer, Stickstoffeinlaß, KPG-Rührer, Rückflußkühler) bei 100°C in 80 - 100 ml destilliertem Toluol unter Stickstoff erhitzt. Nach 30 Minuten hat sich eine klare Lösung gebildet, es werden innerhalb von 30 min. 20 ml über Leinöl destilliertes, farbloses Thionylchlorid zugetropft. 2 h läßt man bei 80°C rühren, bis die Chlorwasserstoff und Schwefeldioxid-Entwicklung beendet ist. Thionylchlorid wird schließlich abdestilliert und bei 70 - 75°C werden 5 g OH-Gruppen-haltiges Bisphenol A Homopolycarbonat (Mw von etwa 28000, gemessen über $\eta$rel oder Lichtzerstreuung) in Chloroform gelöst über 1,5 h zugetropft. Danach läßt man noch 2 h bei 80°C nachrühren und engt die Lösung im Vakuum bei 70°C ein. Nochmaliges Lösen des Rückstandes in Toluol und anschließendes Abziehen des Toluols am Rotationsverdampfer führt zu einem farblosen Produkt mit einer Ausbeute von 11,6 g (97 % d. Th.). Nach Fraktionierung und IR-Spektroskopische Identifikation ergaben sich 77 Gew.-% Blockcopolymer mit $\bar{M}w$ von etwa 50.000.

Beispiel 4

Man verfährt analog Beispiel 3 jedoch mit folgenden Änderungen.

a) Zu der mit Thionylchlorid versetzten Lösung, bestehend aus Polypropylencarbonsäure gibt man zusätzlich 0.05 ml Dimethylformamid.

b) Man tropft aus einem beheizbaren Präzisionstropftrichter, die nach Beispiel 3 hergestellt Polypropylencarbonsäurelösung innerhalb von 40 Minuten zu einer auf 60°C erwärmten Lösung von 2 g des Polycarbonats aus Beispiel 3 in 100 ml Chloroform.

Die Ausbeute beträgt 11,9 g (98 % d. Th.). Nach Fraktionierung in Dimethylformamid/Methylcyclohexan erhält man 77 Gew.-% Blockcopolymer mit $\bar{M}_w$ von etwa 60.000.

Beispiel 5

2 g Polycarbonat aus Beispiel 3 werden bei Raumtemperatur in 100 ml Chloroform gelöst. Bei Siedetemperatur wird diese Lösung mit 1 ml über Leinöl destilliertem Thionylchlorid versetzt und 45' unter Rückfluß erhitzt. Anfänglich entwickeln sich starke Chlorwasserstoffe und Schwefeldioxid-Dämpfe. Dieses Umsetzungsprodukt wird bei 70-80°C in eine heiße Lösung von 10 g Polypropylencarbonsäure (s. Beispiel 3) in 50 ml Toluol während 20 Minuten zugetropft. Anschließend wird 2 Stunden lang bei 70°C erhitzt und gerührt. Die Lösungsmittel werden dann im Vakuum bei 60°C am Rotationsverdampfer bis zur Trockne abgezogen. Die Ausbeute beträgt 12 g (100 % d. Th.);

Nach Fraktionierung in Dimethylformamid/Methylcyclohexan erhält man 78 Gew.-% Blockcopolymer mit $\bar{M}w$ von etwa 50.000.

Bezüglich der in den Beispielen 3 bis 5 durchgeführten Fraktionierung siehe beispielsweise R. Kuhn, Makromolekulare Chemie, 177, 1525 (1976).

Beispiel 6

In einem 300 ml Autoklaven (Gaseinlaß, Einspritzvorrichtung, Rührung, Druck bis 5 bar) werden 140 ml trockenes Toluol sowie 330 mg (0,34 mmol) Anisol unter Stickstoff (2 bar) bei einer Temperatur von -40°C gerührt. Man fügt 50 g (85, 1,2 mol) Propylen hinzu und kühlt auf -60°C unter ständigem Rühren ab. Anschließend gibt man 94 g (0,78 mmol) Diethylaluminiumchlorid in 10 ml Toluol und 234 mg (0.678 mmol) Vanadiumtriacetylacetonat in 10 ml Toluol in genannter Reihenfolge zu. Die Laufzeit der Polymerisation beträgt bei -65°C 10 - 48 Stunden. Man erhält ein "lebendes", im wesentlichen syndiotaktisches Propylen (13C-NMR-O-DCB rr= 0,05-0,7; rm= 0,2-0,5, mm= 0,1-0,2). Probenziehen nach 30 Minuten, 60 Minuten und 100 Minuten ergaben Viskositäten (dl/g) von y = 0,08, y = 0,102 und y = 0,15 (gemessen jeweils in Toluol bei 22°C).

Man erhält insgesamt Molekulargewichte $\bar{M}w$ von 15000 bis 300000, die Ausbeute beträgt 6.7 g (13.4 % d. Th).

Das Reaktionsprodukt wird anschließend bei Temperaturen von -70 bis -10 und Drücken von 0 bis 5 bar und für 5 bis 60 Minuten mit Kohlendioxid versetzt.

Danach wird das Reaktionsgemisch mit wäßriger Säure behandelt und die Polypropylencarbonsäure abfiltriert. Man erhält ein kautschukähnliches, leicht grünlich gefärbtes Produkt mit einer Einweichungstemperatur von 120° C (Ausbeute 21 g, 42 % der Theorie).

Die Überführung in das Polypropylencarbonsäurechlorid erfolgt, indem 10 g Polypropylencarbonsäure (s.o.) in einem 250 ml Dreihalskolben (Thermometer, Stickstoffeinlaß, KPG-Rührer, Rückflußkühler) bei 100° C in 80 ml destilliertem Toluol unter Stickstoff erhitzt. Nach 30 Minuten hat sich eine klare Lösung gebildet, es werden innerhalb von 30 Minuten 20 ml Thionylchlorid zugetropft. 2 Stunden läßt man bei 80° C rühren, bis die Chlorwasserstoff- und Schwefeldioxid-Entwicklung beendet ist. Thionylchlorid wird schließlich abdestilliert. Man wäscht solange den Rückstand mit kaltem Toluol, bis kein Geruch an Thionylchlorid mehr wahrnehmbar ist.

Danach werden 9 g Polypropylencarbonsäurechlorid in 60 ml Toluol gelöst, in einem 250 ml Dreihalskolben bei 50° C mit 1 g OH-Gruppen-haltiges Bisphenol-A-Homopolycarbonat mit $\bar{M}w$ von 28.000 des Beispiels 3 in 5 ml $CH_2CH_2$ vermischt. Man läßt 48 Stunden unter Rückfluß kochen. In Alkohol wird schließlich das Polymer ausgefällt und 10 Stunden bei 60° C im Vakuum getrocknet. Ausbeute nach Fraktionierung in Dimethylformamid/Methylcyclohexan 44 Gew.-% Blockcopolymer mit einem $\bar{M}w$ von etwa 280.000.

Patentansprüche

1. Poly-($C_2$-$C_{10}$-α-olefin)carbonsäuren mit Molekulargewichten $\bar{M}w$ ($\bar{M}w$ ermittelt über Kopplung Gelpermeationschromatographie, Viskosimetrie) von 2000 bis 350000.

2. Poly-carbonsäuren gemäß Anspruch 1, mit $\bar{M}w$ von 70000 bis 200000.

3. Poly-carbonsäuren gemäß Anspruch 1, mit $\bar{M}w$ von 70000 bis 100000.

4. Verfahren zur Herstellung der Poly-carbonsäuren der Ansprüche 1 bis 3, dadurch gekennzeichnet, daß man Poly-($C_2$-$C_{10}$)-α-olefine mit $\bar{M}w$ von 50000 bis 355000 und einer Uneinheitlichkeit von maximal etwa 10 ($U = \bar{M}w/\bar{M}n - 1$) oxidativ bei Temperaturen von 150°C bis 300°C behandelt und gegebenenfalls abbaut.

5. Verfahren zur Herstellung der Poly-carbonsäuren der Ansprüche 1 bis 3, dadurch gekennzeichnet, daß man $C_2$-$C_{10}$-Olefine mit bekannten metallorganischen Mischkatalysatoren in bekannter Weise zu Molekulargewichten $\bar{M}w$ von etwa 50000 bis etwa 350000 polymerisiert und anschließend mit $CO_2$ bei Temperaturen von -10°C bis -70°C und einer Reaktionszeit von 6 bis 20 Stunden bei einem $CO_2$-Druck bis zu 5 bar behandelt, das Reaktionsgemisch danach mit wäßriger Säure ansäuert und die erhaltene Polyolefincarbonsäure abtrennt.

6. Poly-($C_2$-$C_{10}$-α-olefin)-carbonsäurehalogenide mit Molekulargewichten $\bar{M}w$ von 2000 bis 350000.

7. Poly-($C_2$-$C_{10}$-α-olefin)-carbonsäurechloride gemäß Anspruch 6.

8. Verfahren zur Herstellung der Polyolefincarbonsäurehalogenide der Ansprüche 6 und 7, dadurch gekennzeichnet, daß man die Poly-($C_2$-$C_{10}$-α-olefin)carbonsäuren der Ansprüche 1 bis 3 mit Halogenierungsmitteln, gegebenenfalls in einem organischen Lösungsmittel umsetzt.

9. Verwendung der Polyolefincarbonsäurehalogenide der Ansprüche 6 und 7 zur Herstellung von Polyolefin-Polycarbonat-Blockcopolymeren.

10. Verfahren zur Herstellung von Polyolefin-Polycarbonat-Blockcopolymeren, dadurch gekennzeichnet, daß man aromatische Polycarbonate mit $\bar{M}w$ von 2000 bis 60000 mit endständigen phenolischen OH-Gruppen mit den Poly-($C_2$-$C_{10}$-α-olefin)-carbonsäurehalogeniden der Ansprüche 6 und 7 in Mengenverhältnissen von 1 bis 99 Gew.-% Polycarbonat zu 99 Gew.-% bis 1 Gew.-% Carbonsäurehalogenid bei Temperaturen von 30° C bis 120° C in inerten organischen Lösungsmitteln, gegebenenfalls unter Mitverwendung von Katalysatoren umsetzt und nach einer Reaktionszeit von etwa 2 Stunden bis etwa 10 Stunden das Lösungsmittel entfernt und das erhaltene Blockcopolymer reinigt und isoliert.

11. Polyolefin-Polycarbonat-Blockcopolymere erhältlich nach dem Verfahren des Anspruches 10.

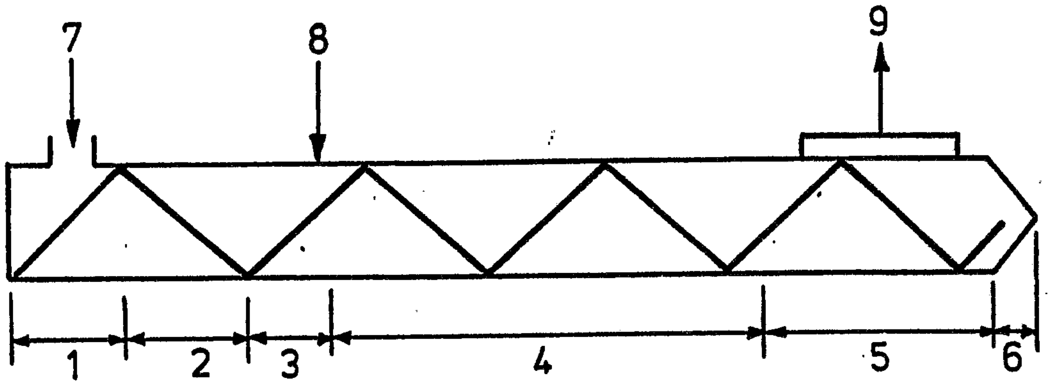
7
8
9
1
2
3
4
5
6